(19) **Europäisches Patentamt / European Patent Office / Office européen des brevets**

(11) **EP 3 309 956 B1**

(12) ## EUROPEAN PATENT SPECIFICATION

(45) Date of publication and mention
of the grant of the patent:
**06.05.2020  Bulletin 2020/19**

(51) Int Cl.:
***H02P 29/024*** *(2016.01)*

(21) Application number: **16465549.0**

(22) Date of filing: **12.10.2016**

(54) **METHOD FOR OPERATING AN ELECTRIC INVERTER FOR AN ELECTRIC MACHINE, CONTROLLER CIRCUIT, ELECTRIC DRIVE AND MOTOR VEHICLE**

VERFAHREN ZUM BETRIEB EINES ELEKTRISCHEN WECHSELRICHTERS FÜR EINE ELEKTRISCHE MASCHINE, STEUERGERÄTESCHALTUNG, ELEKTRISCHER ANTRIEB UND KRAFTFAHRZEUG

PROCÉDÉ DE FONCTIONNEMENT D'UN ONDULEUR ÉLECTRIQUE POUR UNE MACHINE ÉLECTRIQUE, CIRCUIT DE COMMANDE, ENTRAÎNEMENT ÉLECTRIQUE ET VÉHICULE À MOTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.04.2018  Bulletin 2018/16**

(73) Proprietor: **Continental Automotive GmbH
30165 Hannover (DE)**

(72) Inventors:
• **Andrici, Ciprian
700214 Iasi (RO)**
• **Ipatiov, Alexandru
700285 Iasi (RO)**
• **Irimia, Nicolae Daniel
700333 Iasi (RO)**

(56) References cited:
**US-A1- 2012 169 263**

• **LIU GUOHAI ET AL: "Comparison of Two SVPWM Control Strategies of Five-Phase Fault-Tolerant Permanent-Magnet Motor", IEEE TRANSACTIONS ON POWER ELECTRONICS, INSTITUTE OF ELECTRICAL AND ELECTRONICS ENGINEERS, USA, vol. 31, no. 9, 1 September 2016 (2016-09-01), pages 6621-6630, XP011604379, ISSN: 0885-8993, DOI: 10.1109/TPEL.2015.2499211 [retrieved on 2016-03-24]**
• **DING SHICHUAN ET AL: "Fault tolerant control for a five-phase permanent magnet synchronous machine driving system", 2016 IEEE 11TH CONFERENCE ON INDUSTRIAL ELECTRONICS AND APPLICATIONS (ICIEA), IEEE, 5 June 2016 (2016-06-05), pages 2021-2025, XP032982716, DOI: 10.1109/ICIEA.2016.7603921 [retrieved on 2016-10-19]**
• **WON-SANG IM ET AL: "Diagnosis and Fault-Tolerant Control of Three-Phase AC DC PWM Converter Systems", IEEE TRANSACTIONS ON INDUSTRY APPLICATIONS, IEEE SERVICE CENTER, PISCATAWAY, NJ, US, vol. 49, no. 4, 1 July 2013 (2013-07-01), pages 1539-1547, XP011520310, ISSN: 0093-9994, DOI: 10.1109/TIA.2013.2255111**

**Description**

The invention is concerned with a method for operating an electric inverter that is driving an electric machine. The electric converter is controlled by a controller circuit that provides command vectors that control the switching state of each switch of the electric inverter such that the stator phases of the electric machine are connected either to a positive potential or a negative potential. The method can be used for an electric machine that comprises four or more than four stator phases . The invention also provides said controller circuit, an electric drive comprising the controller circuit and a motor vehicle that comprises the electric drive.

An electric drive for a motor vehicle is a safety relevant system as a fault or damage in one of the components of the electric drive may result in loss of control over the moving motor vehicle. One way of reacting to a detected fault in the electric drive, is to shut down or turn off the whole electric drive. This is a severe impact on the availability of the electric drive, as the electric drive may not be used to, e.g., support the driver in driving or moving the motor vehicle into a safe position after the fault in the electric drive has been detected.

Liu et al. (G. Liu, L. Qu, W. Zhao, Q. Chen, and Y. Xe, "Comparison of Two SVPWM Control Strategies of Five-Phase Fault-Tolerant Permanent Magnet Motor", IEEE Transactions on Power Electronics, Vol. 31, No. 9, 2016) describe a control strategy for controlling an inverter, wherein in reaction to a fault the SVPWM method is switched from a "Healthy SVPWM" to a "Fault SVPWM".

It is an object of the present invention, to keep up the availability of an electric drive of a motor vehicle or of another electrically driven device after a fault has been detected in the electric drive.

The object is achieved by the subject matter of the independent claims. Advantageous developments with convenient and non-trivial further embodiments of the invention are specified in the following description, the dependent claims and the figure.

The invention provides a method for operating an electric power converter or short electric converter. The inverter can be, e.g., an H-bridge inverter that provides switches for selectively or controllably connecting stator phases of the electric machine to a positive potential and a negative potential. The negative potential is also called the ground potential.

The inventive method is based on the space vector modulation (SVM) as known in the prior art. In other words, for setting the switching state of the inverter, a controller circuit, e.g., a microcontroller, stores a first vector set of command vectors. Each command vector comprises command vector entries, one for each stator phase to be controlled. Each command vector entry may, e.g., control the switching state of one H-bridge of the converter. One single command vector defines the switching states of all H-bridges at a given time point. By connecting the stator phases to either one of the potentials, spatial components of an electro-magnetic field vector inside the electric machine is set or spatially aligned. The whole vector set of command vectors is designed for alternatingly connecting the four stator phases or more than four stator phases of the electric machine to the positive potential and the negative potential. This enables the controller circuit to rotate the field vector in the electric machine.

In a normal operation mode, the controller circuit drives the electric machine by switching the inverter according to the vector set of command vectors . In other words, the command vectors are used one after the other in a given circular or rotating order. The time point for switching between the command vectors is chosen in dependence on the rotating angle of the electric machine.

During normal operation mode, a fault detection unit observes the electric machine and the inverter. The fault detection unit may be part of the control circuit. It may comprise program module that can be executed by a microcontroller of the control circuit. The fault detection unit detects a fault of a special type which is called here a predefined failure type. This failure type comprises that one of the stator phases is permanently connected to one of the potentials (positive potential or negative potential) or to one of the other stator phases (short circuit between two stator phases of the electric machine). A fault of this failure type results in a permanent and/or uncontrollable electric current in at least one of the stator phases such that the said electro-magnetic field vector inside the electric machine is influenced by an additional, uncontrolled spatial component, which makes controlling the torque that is generated by the electric machine impossible on the basis of the vector set of command vectors.

In prior art, this would result in a shut-down of the electric machine by, e.g., interrupting an electric connection between the inverter and the electric machine.

In order to continue driving the electric machine and keep control over the torque generated by the electric machine, the invention provides the following solution. For the fault type that has been detected, a predefined additional vector set is provided that may be stored in the controller circuit. For example, any vector set of command vectors may be defined by digital data that may be stored in a data storage of the controller circuit. The controller circuit continues driving the electric machine in a fault regime mode (instead of the normal operation mode) by switching the inverter according to the command vectors of the additional vector set (instead of the first mentioned normal vector set). The command vectors of the additional vector set are designed to compensate the additional spatial component of the electro-magnetic field vector that is generated by the fault, i.e., by the permanent connection of one of the stator phases to one of the potentials or to one of the other stator phases. In other words, the command vectors of the additional vector set provide a spatial component of the electric voltage and/or electric current that compensates the un-wanted spatial component of the voltage and/or current that is generated by the fault. Thus, the electric machine continues to be driven by the controller circuit on the basis of the command vectors of the additional set. As the electric machine comprises four or more than four stator phases, a higher number of command vectors is available than is needed for actually rotating the machine. This redundancy allows for keeping the electric machine rotating and for using the redundant command vectors for compensating the additional, unwanted spatial component of the voltage and/or current in the space vector modulation.

Like in a conventional electric machine, the controller circuit also provides the possibility to shut-off or shut-down the electric machine using shut-off circuits. At least two shut-off circuits are provided in order to provide redundancy. However, instead of providing one of the shut-off circuits in the electric power path, that is between the inverter and the electric machine, all shut-off circuits for deactivating the electric machine are located in a low-voltage signal path connecting the controller to the inverter. That is, the redundant shut-off circuits are all provided in the low-power domain. Thus, the shut-off circuits can be provided in the form of technically simple switches like, e.g., transistors or relays for voltages below 60 V.

The invention also comprises optional technical features that provide additional advantages.

The fault detection unit may be designed to detect faults of one or several different failure types. A respective additional vector set of command vectors can thus be provided for at least one of the following fault types: an open winding in the electric machine, a short winding (short-circuited winding) to positive potential, a short winding (short-circuited winding) to negative potential, a short (short-circuit) between stator phases of the electric machine, a permanently conductive transistor in the inverter. These fault types generate the described additional spatial component that causes an irregular or varying torque in the electric machine. Command vectors that are suitable for compensating the additional spatial component of a specific fault type may be derived by experiments on the basis of a faulty inverter and/or a faulty electric machine that comprises the respective fault of a given fault type. By varying the command vectors, suitable command vectors may be derived or found.

One embodiment of the invention deals with the specific case of a four-phase electric machine, that is four stator phases A, B, C, D of the electric machine are controlled by command vectors that are defined by vector entries a, b, c, d (a controlling A, b controlling B, c controlling C, d controlling D). In the case of a fault type which comprises a permanent connection of stator phase A to ground or negative potential, such that $a=0$ is always given, the first vector set for the normal operation mode comprises a succession of command vectors 1001, 1000, 1100 and the additional vector set for the fault regime mode, this succession of command vectors is replaced or represented by corresponding command vectors 0101, 0000, 0101. This is one example to illustrate, how the additional spatial component caused by $a=0$ at times when stator phase A should provide a component for the spatial vector (i.e. $a=1$), is compensated using the opposite stator phase.

In order to perform the inventive method, the invention also provides a controller circuit for an inverter of an electric machine. The controller circuit comprises a processing unit that is designed to perform an embodiment of the inventive method. The processing unit may comprise at least one microcontroller and/or at least one microprocessor.

For detecting the said fault in the electric machine and/or the inverter, measurement circuitry may be provided as is known for fault detection in the prior art.

By providing the controller circuit in an electric drive, the inventive electric drive is provided. The electric drive also comprises an electric machine (e.g. a synchronous motor) and an inverter connected to the electric machine.

The inventive electric drive provides special advantages in a motor vehicle. The invention therefore also comprises a motor vehicle with an electric drive according to the invention. This motor vehicle may still be controlled using the electric drive even after the detection of the fault, as no shut-down of the electric drive is needed.

In the following an exemplary implementation of the invention is described. The figures show:

Fig. 1    a schematic illustration of a motor vehicle according to the invention;

Fig. 2    a comparison of two vector sets of command vectors that may be comprised in the motor vehicle according to Fig. 1;

Fig. 3    a diagram with schematic graphs illustrating stator phase currents in an electric machine of the motor vehicle according to Fig. 1;

Fig. 4    a diagram with schematic graphs illustrating the electric currents in the a $\alpha$-$\beta$-$\gamma$-domain; and

Fig. 5    a diagram with a schematic graph illustrating the torque generated by the electric machine.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures elements that provide the same function are marked with identical reference signs.

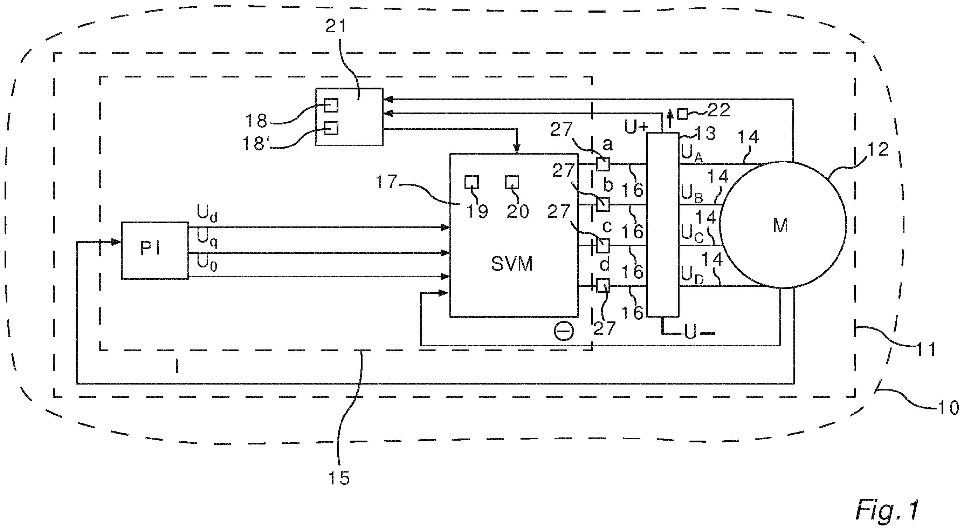

Fig. 1 shows a motor vehicle 10 that can be an electrically driven motor vehicle or a hybrid motor vehicle. Motor vehicle 10 can comprise an electrical or electric drive 11 for driving the motor vehicle 10. Electric drive 11 can comprise an electric engine or electric machine 12 that can be controlled or driven by an electric inverter 13. An electric power supply for the inverter 13 is presented by a positive potential U+ and a negative potential U-. The electric machine 12 may comprise four electric stator phases 14 or more than four electric stator phases 14. For the following explanations, the four stator phases 14 are designated as A, B, C, D. The inverter 13 controls electric voltages $U_A$, $U_B$, $U_C$, $U_D$ in the stator phases 14 by connecting each stator phase 14 either to the positive potential U+ or the negative potential U- of the electric power supply.

The inverter 13 may connect the stator phases 14 to either of the potential U+, U- by, e.g., switching H-bridges. The switching for each stator phase 14 is controlled in the inverter 13 by a controller circuit 15 that generates control signals 16 for each stator phase 14 according to a space vector modulation 17 (SVM). The value of the control signals 16 is can be set by a command vector [a b c d] . Each command vector entry a, b, c, d can be one of 0 and 1. Controller circuit 15 controls the inverter 13 as a function of rotation angle θ and electric currents I of electric machine 12 by choosing an appropriate command vector [a b c d] for each point in time.

The control can be performed in a known manner by providing or using a controller algorithm, e.g. a PI-regulator (PI -proportional integral) that may generate control values $U_d$, $U_q$, $U_0$ for the electric voltages in the q-d-0-domain (q-d -direct-quadrature).

The space vector modulation 17 (SVM) may then use an inverse Park transform for choosing one command vector [a b c d] out of a vector set 18 of command vectors for setting the command signal 16 depending on current rotation angle θ of electric engine 12.

A general form of the inverse Park transform for setting the values of $U_A$, $U_B$, $U_C$, $U_D$ needed at given rotation angle θ and given control signal Ud, Uq, U0 is given as:

$$\begin{bmatrix} f_A \\ f_B \\ f_C \\ f_D \end{bmatrix} = \begin{bmatrix} \cos(\theta) & -\sin(\theta) & 1 \\ \cos\left(\theta - \dfrac{\pi}{2}\right) & -\sin\left(\theta - \dfrac{\pi}{2}\right) & 1 \\ \cos(\theta - \pi) & -\sin(\theta - \pi) & 1 \\ \cos\left(\theta + \dfrac{\pi}{2}\right) & -\sin\left(\theta + \dfrac{\pi}{2}\right) & 1 \end{bmatrix} \cdot \begin{bmatrix} f_d \\ f_q \\ f_0 \end{bmatrix}$$

wherein f can be one of the quantities current I, voltage U and flux linkage for each of the stator phases 14.

The vector set 18 of command vectors is used in a normal operation mode 19 of controller circuit 15. Controller circuit 15 may be switched from normal operation mode 19 to a fault regime operation mode 20 in the case, that a fault detection unit 21 of controller circuit 15 detects a fault 22 either in inverter 13 or in electric machine 12.

If a fault 22 of a predefined fault type is detected, controller circuit 15 may be switched from normal operation mode 19 to fault regime operation mode 20 by changing from vector set 18 to a vector set 18' of command vectors for generating control signals 16 as a function of control signals $U_d$, $U_q$, U0 and rotation angle θ.

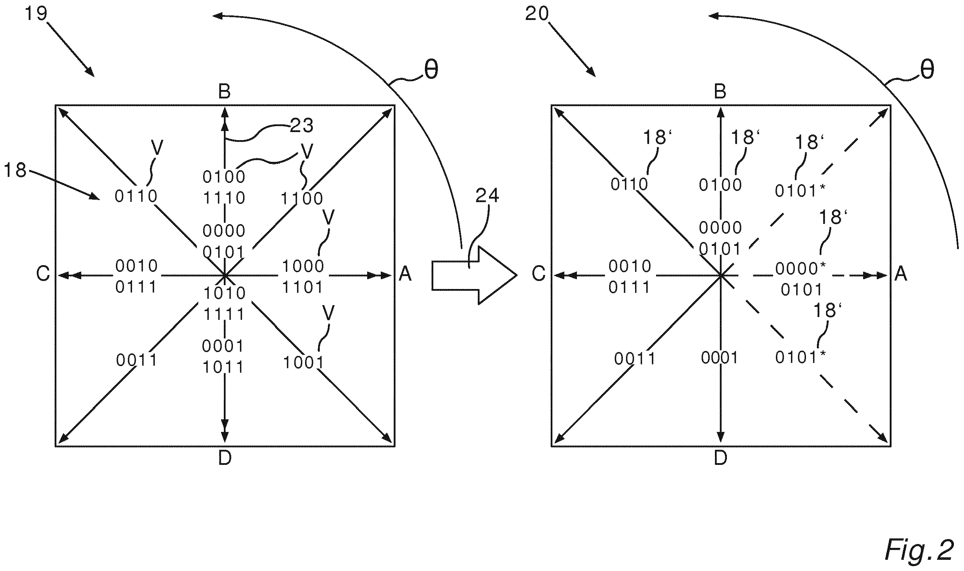

Fig. 2 illustrates the two vector sets 18, 18' of command vectors V wherein the shown notation denotes each command vector as V = [a, b, c, d], wherein the value shown indicates that the corresponding state of stator phase 14 is connected to positive potential U+ (value 1) or negative potential U- (value 0). For example, 1100 means a=1, b=1, c=0, d=0. Note that only some of the command vectors V are designed with a reference sign.

Fig. 2 also illustrates a spatial orientation of a spatial vector 23 that can be the vector of electromagnetic force inside the electric machine 12 resulting from the corresponding command vector entries a, b, c, d shown in the figure. An angular difference between rotation angle θ and the chosen spatial vector 23 is decided as a function of control signals Ud, Uq, U0. The spatial position of the stator phases A, B, C, D is also illustrated.

On fault detection 24 the vector set 18 of command vectors is exchanged by vector set 18' of command vectors. In Fig. 2 the command vectors 18' that are different as compared to vector set 18 are marked with a star symbol.

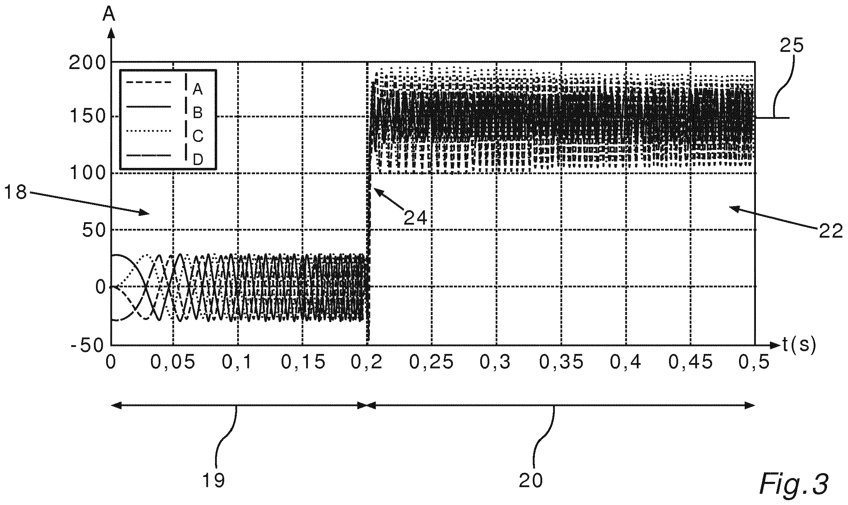

Fig. 3 illustrates electric current $I_A$, $I_B$, $I_C$, $I_D$ of the four stator phases 14 over time t for the case that as a fault 22 the inverter 13 permanently connects stator phase A with negative potential U- at t=0.2s.

The fault detection unit 21 may detect this fault 22 and may switch from vector set 18 to vector set 18' of command vectors. Due to fault 22, a mean value 25 of electric current is un-equal 0. This results in an additional torque which is compensated by the command vectors of vector set 18' as shown in Fig. 2.

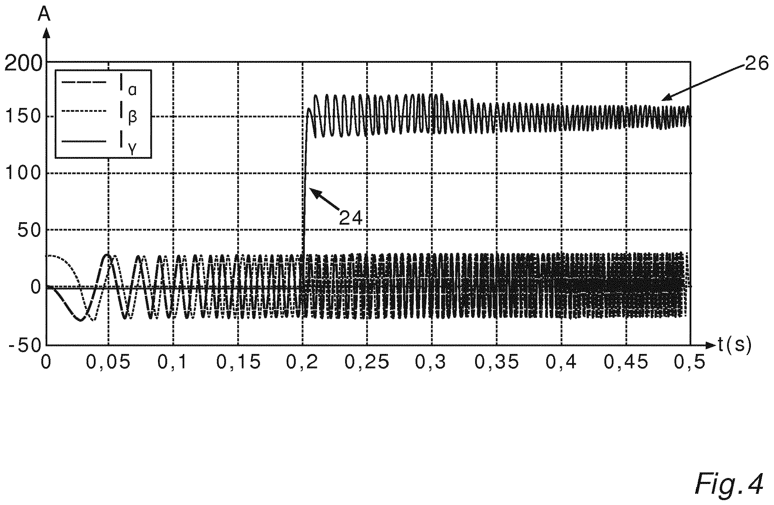

In order to illustrate the effect of fault 22, Fig. 4 illustrates an $\alpha$-$\beta$-$\gamma$-representation of the electric currents in the stator phases 14. The following equation shows how this representation may be derived from the d-q-0-representation:

$$\begin{bmatrix} f_\alpha \\ f_\beta \\ f_\gamma \end{bmatrix} = \begin{bmatrix} \cos(\theta) & -\sin(\theta) & 0 \\ \sin(\theta) & \cos(\theta) & 0 \\ 0 & 0 & 1 \end{bmatrix} \cdot \begin{bmatrix} f_d \\ f_q \\ f_0 \end{bmatrix}$$

Fig. 4 shows that in the presence of fault 22 (t>0.2s) and by switching from vector set 18 to vector set 18' the components $I_\alpha$, $I_\beta$ are only influenced in that the rotational speed (frequency) is increased, while $I_\gamma$ indicates that a constant DC-offset 26 (DC - direct current) is provided for compensating the fault 22.

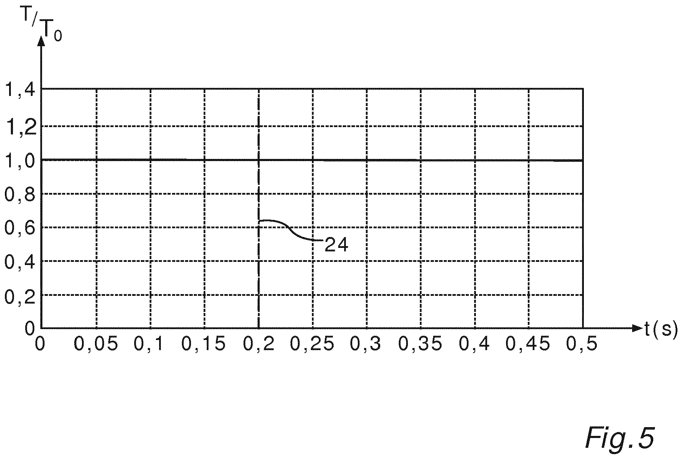

Fig. 5 illustrates that a torque T generated by electric machine 12 based the Pi-regulation performed by regulator 16 can be kept constant as a pre-defined torque T0 independent of the presence of fault 22 by using the vector set 18'.

Thus for compensating a fault 22, controller circuit 15 provides a reconfigurable architecture with a higher number of command vectors than necessary for normal operation mode 19. This allows for compensating the spatial component of the voltage/current corresponding to the fault operation regime mode 20. The treatment of failures is possible for an open winding, a short winding (to battery or to ground), a short between stator phases . The example shows a short-to-ground fault . A corresponding vector set 18' for the other types of faults can be derived by experiments.

As the torque of electric machine 12 may still be controlled even with fault 22 present (see Fig. 5), redundant shut-off switches 27 are not needed in the high-voltage or high-current domain of stator phases 14, but only in the low-voltage (smaller than 60 Volts) or low-current (smaller than 10 Ampere) domain of the control signal paths for control signals 16.

Overall, the example shows how a motor control strategy for a fault regime operation is provided by the invention.

Reference signs

| | |
|---|---|
| 10 | motor vehicle |
| 11 | electric drive |
| 12 | electric machine |
| 13 | inverter |
| 14 | stator phase |
| 15 | controller circuit |
| 16 | control signal |
| 17 | space vector modulation you paragraph |
| 18 | vector set |
| 18' | vector set |
| 19 | normal operation mode |
| 20 | fault regime mode |
| 21 | fault detection unit |
| 22 | detected fault |
| 23 | spatial vector |
| 24 | change of command vectors |
| 25 | mean value |
| 26 | offset |
| 27 | shut-off circuits |

V   command vector

**Claims**

1.  Method for operating an electric inverter (13) that is driving an electric machine (12), wherein

    - a controller circuit (15) stores a first vector set (18) of command vectors (18') for alternatingly connecting four stator phases (14) or more than four stator phases (14) of the electric machine (12) to a positive potential (U+) and a negative potential (U-) for setting spatial components (23) of an electro-magnetic field vector inside the electric machine (12), and
    - in a normal operation mode (19) the controller circuit (15) drives the electric machine (12) by switching the inverter (13) on the basis of the vector set (18) of command vectors (V), and
    - a fault detection unit (21) detects a fault (22) of a predefined fault type, the fault type comprising that one of the stator phases (14) is permanently connected to one of the potentials (U+, U-) or to one of the other stator phases (14), wherein for the fault type a predefined additional vector set (18') of command vectors (V) is provided and the controller circuit (15) continues driving the electric machine (12) in a fault regime mode (20) by switching the inverter (13) on the basis of the additional vector set (18') of command vectors (V), wherein the command vectors (V) of the additional vector set (18') are designed to compensate in the electro-magnetic field vector a spatial component generated by the fault (22), **characterized by** providing redundant shut-off circuits (27) for deactivating the electric machine (12), wherein the shut-off circuits are comprised in the controller circuit (15) and all shut-off circuits (27) are located in a low-voltage signal path connecting the controller circuit (15) to the inverter (13), such that the redundant shut-off circuits are all provided in the low-power domain of the electric inverter (13).

2.  Method according to claim 1, wherein a respective additional vector set (18') of command vectors (V) is provided for at least one of the following fault types: an open winding in the electric machine (12), a short winding to positive potential (U+), a short winding to negative potential (U-), short between stator phases (14), a permanently conductive transistor in the inverter (13).

3.  Method according to any of the preceding claims, wherein in the case of four stator phases A, B, C, D, the command vectors (V) are defined by vector entries a, b, c, d and in the case of a fault type which comprises a permanent connection of stator phase A to ground or negative potential (U-), such that a=0 is always given, the first vector set (18) comprises a succession of command vectors (V): 1001, 1000, 1100, and in the additional vector set (18') the succession of command vectors (V) is replaced by 0101, 0000, 0101.

4.  Controller circuit (15) for an inverter (13) of an electric machine (12), the controller circuit (15) comprising a processing unit that is designed to perform a method according to one of the preceding claims comprising redundant shut-off circuits (27) for deactivating the electric machine (12).

5.  Electric drive (11) comprising an electric machine (12) and an inverter connected to the electric machine (12) **characterized in that** the electric drive (11) comprises a controller circuit (15) according to claim 4.

6.  Motor vehicle (10) comprising an electric drive (11) according to claim 5.

**Patentansprüche**

1.  Verfahren zum Betreiben eines elektrischen Wechselrichters (13), der eine Elektromaschine (12) antreibt, wobei

    - eine Steuerungsschaltung (15) einen ersten Vektorsatz (18) aus Befehlsvektoren (18') zum abwechselnden Verbinden von vier Statorphasen (14) oder mehr als vier Statorphasen (14) der Elektromaschine (12) mit einem positiven Potenzial (U+) und einem negativen Potenzial (U-) zum Einstellen räumlicher Komponenten (23) eines Elektromagnetisches-Feld-Vektors innerhalb der Elektromaschine (12) speichert, und
    - die Steuerungsschaltung (15) die Elektromaschine (12) in einem Normalbetriebsmodus (19) durch Schalten des Wechselrichters (13) auf der Basis des Vektorsatzes (18) aus Befehlsvektoren (V) antreibt, und
    - eine Fehlerdetektionseinheit (21) einen Fehler (22) einer vordefinierten Fehlerart detektiert, wobei die Fehlerart aufweist, dass eine der Statorphasen (14) permanent mit einem der Potenziale (U+, U-) oder mit einer der anderen Statorphasen (14) verbunden ist, wobei für die Fehlerart ein vordefinierter zusätzlicher Vektorsatz (18') aus Befehlsvektoren (V) bereitgestellt wird und die Steuerungsschaltung (15) die Elektromaschine (12) in einem Fehlerregimemodus (20) durch Schalten des Wechselrichters (13) auf der Basis des zusätzlichen Vektorsatzes (18') aus Befehlsvektoren (V) weiterhin antreibt, wobei die Befehlsvektoren (V) des zusätzlichen Vektorsatzes (18') dahingehend ausgestaltet sind, in dem Elektromagnetisches-Feld-Vektor eine durch den Fehler (22) erzeugte räumliche Komponente zu kompensieren, **gekennzeichnet durch** Bereitstellen redundanter Abschaltschaltungen (27) zum Deaktivieren der Elektromaschine (12), wobei die Abschaltschaltungen in der Steuerungsschaltung (15) enthalten sind und sich alle Abschaltschaltungen (27) in einem Niederspannungssignalpfad befinden, der die Steuerungsschaltung (15) mit dem Wechselrichter (13) verbindet, sodass die redundanten Abschaltschaltungen alle in der Niederspannungsdomäne des elektrischen Wechselrichters (13) bereitgestellt sind.

2. Verfahren nach Anspruch 1, wobei für mindestens eine der folgenden Fehlerarten ein jeweiliger zusätzlicher Vektorsatz (18') aus Befehlsvektoren (V) bereitgestellt wird: eine Wicklungsunterbrechung in der Elektromaschine (12), ein Wicklungskurzschluss zu positivem Potenzial (U+), ein Wicklungskurzschluss zu negativem Potenzial (U-), ein Kurzschluss zwischen Statorphasen (14), ein permanent leitender Transistor in dem Wechselrichter (13).

3. Verfahren nach einem der vorhergehenden Ansprüche, wobei im Fall von vier Statorphasen A, B, C, D die Befehlsvektoren (V) durch Vektoreinträge a, b, c, d definiert sind und im Fall einer Fehlerart, die eine permanente Verbindung der Statorphase A mit Masse oder negativem Potenzial (U-) aufweist, sodass a=0 stets gegeben ist, der erste Vektorsatz (18) eine Abfolge von Befehlsvektoren (V) : 1001, 1000, 1100 aufweist, und in dem zusätzlichen Vektorsatz (18') die Abfolge von Befehlsvektoren (V) durch 0101, 0000, 0101 ersetzt wird.

4. Steuerungsschaltung (15) für einen Wechselrichter (13) einer Elektromaschine (12), wobei die Steuerungsschaltung (15) eine Verarbeitungseinheit aufweist, die dazu ausgestaltet ist, ein Verfahren nach einem der vorhergehenden Ansprüche durchzuführen, aufweisend redundante Abschaltschaltungen (27) zum Deaktivieren der Elektromaschine (12).

5. Elektroantrieb (11), der eine Elektromaschine (12) und einen mit der Elektromaschine (12) verbundenen Wechselrichter aufweist,
**dadurch gekennzeichnet, dass** der Elektroantrieb (11) eine Steuerungsschaltung (15) nach Anspruch 4 aufweist.

6. Kraftfahrzeug (10), das einen Elektroantrieb (11) nach Anspruch 5 aufweist.

**Revendications**

1. Procédé permettant de faire fonctionner un onduleur électrique (13) qui entraîne une machine électrique (12), selon lequel

- un circuit contrôleur (15) stocke un premier ensemble (18) de vecteurs composé de vecteurs de commande (18') permettant de relier en alternance quatre phases statoriques (14) ou plus de quatre phases statoriques (14) de la machine électrique (12) à un potentiel positif (U+) et à un potentiel négatif (U-) pour positionner des composantes spatiales (23) d'un vecteur champ électromagnétique à l'intérieur de la machine électrique (12), et
- dans un mode de fonctionnement normal (19), le circuit contrôleur (15) entraîne la machine électrique (12) en commutant l'onduleur (13) sur la base de l'ensemble (18) de vecteurs composé de vecteurs de commande (V), et
- une unité de détection de défaut (21) détecte un défaut (22) d'un type de défaut prédéfini, le type de défaut comprenant le fait que l'une des phases statoriques (14) est reliée en permanence à l'un des potentiels (U+, U-) ou à l'une des autres phases statoriques (14) ; pour le type de défaut, un ensemble additionnel prédéfini (18') de vecteurs composé de vecteurs de commande (V) étant fourni et le circuit contrôleur (15) continuant d'entraîner la machine électrique (12) dans un mode de régime de défaut (20) en commutant l'onduleur (13) sur la base de l'ensemble additionnel prédéfini (18') de vecteurs composé de vecteurs de commande (V) ; les vecteurs de commande (V) de l'ensemble additionnel prédéfini (18') de vecteurs étant conçus pour compenser, dans le vecteur champ électromagnétique, une composante spatiale générée par le défaut (22), **caractérisé par** la fourniture de circuits de coupure redondants (27) permettant de désactiver la machine électrique (12), les circuits de coupure étant compris dans le circuit contrôleur (15) et tous les circuits de coupure (27) étant situés dans un trajet de signal basse tension reliant le circuit contrôleur (15) à l'onduleur (13) de telle manière que les circuits de coupure redondants sont tous fournis dans le domaine de faible puissance de l'onduleur électrique (13).

2. Procédé selon la revendication 1, dans lequel un ensemble additionnel prédéfini (18') de vecteurs constitué de vecteurs de commande (V) est fourni pour au moins un des types de défaut suivants : un enroulement ouvert dans la machine électrique (12), un enroulement en court-circuit au potentiel positif (U+), un enroulement en court-circuit au potentiel négatif (U-), un court-circuit entre des phases statoriques (14), un transistor en permanence conducteur dans l'onduleur (13).

3. Procédé selon l'une quelconque des revendications précédentes, dans lequel, dans le cas de quatre phases statoriques A, B, C, D, les vecteurs de commande (V) sont définis par des entrées vectorielles a, b, c, d et, dans le cas d'un type de défaut comprenant une liaison permanente de la phase statorique A au potentiel de masse ou négatif (U-), de telle manière que a=0 est toujours donné, le premier ensemble (18) de vecteurs comprend une succession de vecteurs de commande (V) : 1001, 1000, 1100 et, dans l'ensemble additionnel (18') de vecteurs, la succession de vecteurs de commande (V) est remplacée par 0101, 0000, 0101.

4. Circuit contrôleur (15) pour un onduleur (13) d'une machine électrique (12), le circuit contrôleur (15) comprenant une unité de traitement conçue pour réaliser un procédé selon l'une des revendications précédentes comprenant des circuits de coupure redondants (27) permettant de désactiver la machine électrique (12) .

5. Entraînement électrique (11) comprenant une machine électrique (12) et un onduleur relié à la machine électrique (12),
l'entraînement électrique (11) étant **caractérisé en ce qu'**il comprend un circuit contrôleur (15) selon la revendication 4.

6. Véhicule motorisé (10) comprenant un entraînement électrique (11) selon la revendication 5.

Fig.1

EP 3 309 956 B1

*Fig.2*

θ

20

19

24

23

θ

A    B    C    D

0000
0101
0100
0101*
0101*
0000*
0110
0010
0111
0001
0011
18'
18
18'
18'
18'

0100
1110
0000
0101
1010
1111
0001
1011
1100
1000
1101
1001
0110
0010
0111
0011
18
23
v
v
v
v

*Fig.3*

EP 3 309 956 B1

*Fig.4*

Fig.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G. LIU ; L. QU ; W. ZHAO ; Q. CHEN ; Y. XE.** Comparison of Two SVPWM Control Strategies of Five-Phase Fault-Tolerant Permanent Magnet Motor. *IEEE Transactions on Power Electronics,* 2016, vol. 31 (9